# EUROPEAN PATENT APPLICATION

(11) **EP 4 704 424 A1**
(43) Date of publication of application: **04.03.2026**
(21) Application number: 24196542.5
(22) Date of filing: 26.08.2024
(51) Int. Cl.: H04N 21/2343

(54) **XR STREAMING METHOD AND XR PROJECTION SYSTEM**

(71) Applicant: Holo-Light GmbH, 6020 Innsbruck (AT)
(72) Inventor: Landgraf, Philipp, 6020 Innsbruck (AT); Werlberger, Alexander, 6020 Innsbruck (AT); Howie, Aidan, 6020 Innsbruck (AT)
(74) Representative: Prinz & Partner mbB

(57) **Abstract**

An extended reality, XR, streaming method of streaming XR images from an XR application instance (26) to an XR device (12) is described. The XR application instance (26) is integrated into a computer device (14) that is provided separately from the XR device (12). The XR streaming method comprises the steps of
- obtaining, by the XR application instance (26), an XR image to be transmitted to the XR device (12), wherein the XR image is obtained with respect to a predetermined reference position, wherein the predetermined reference position has a predetermined relation to a momentary position of the XR device (12), wherein the XR image has a first resolution;
- streaming, by the XR application instance (26), the XR image to the XR device (12); and
- up-converting, by the XR device (12), the XR image received from the XR application instance (26) in resolution, thereby obtaining an up-converted XR image to be displayed on the XR device (12), wherein the up-converted XR image has a second resolution that is higher than the first resolution.

Further, an XR projection system (10) is described.

## Description

The present invention generally relates to an XR streaming method of streaming XR images from an XR application instance to an XR device. The present invention further relates to an XR projection system.

In certain types of extended reality applications, XR images to be displayed on an XR device are rendered by an external computer device and are then streamed to the XR device.

With native resolutions und image quality standards of the XR devices becoming higher, the streaming approach is advantageous due to the rendering becoming increasingly more computationally expensive, which is compensated by the higher computational resources of external computer devices.

However, with increasing resolution and image quality, the necessary streaming bandwidth for streaming the XR images increases as well.

The object of the present invention is to provide an XR streaming method and an XR projection system that require less streaming bandwidth.

According to the present invention, the problem is solved by an extended reality, XR, streaming method of streaming XR images from an XR application instance to an XR device. The XR application instance is integrated into a computer device that is provided separately from the XR device. The XR streaming method comprises the steps of
- obtaining, by the XR application instance, an XR image to be transmitted to the XR device, wherein the XR image is obtained with respect to a predetermined reference position, wherein the predetermined reference position has a predetermined relation to a momentary position of the XR device, wherein the XR image has a first resolution;
- streaming, by the XR application instance, the XR image to the XR device; and
- up-converting, by the XR device, the XR image received from the XR application instance in resolution, thereby obtaining an up-converted XR image to be displayed on the XR device, wherein the up-converted XR image has a second resolution that is higher than the first resolution.

Therein and in the following, the term "position" is understood to denote a location and/or orientation.

Accordingly, the term "momentary position of the XR device" relates to the momentary location and/or the momentary orientation of the XR device, etc.

The predetermined reference position may be an arbitrary position having a fixed relation to the momentary position of the XR device.

Further, the term "obtaining an XR image to be transmitted to the XR device, wherein the XR image has a first resolution" is understood to denote that the XR image may be rendered by the XR application instance with the first resolution, or that the XR image may be rendered by the XR application instance with a higher resolution than the first resolution and may be down-converted by the XR application instance.

The term "XR device" is understood to denote an electronic device that is configured to display an extended reality (XR) image, i.e. an augmented reality (AR) image, a mixed reality (MR) image, and/or a virtual reality (VR) image.

For example, the XR device may be a head-mounted display, e.g. an electronic wearable having the shape of glasses. However, it is to be understood that the XR device may be established as any other XR-capable electronic device, e.g. as a smartphone or as a tablet.

Moreover, the term "XR image" is understood to denote at least one virtual image.

In the case of augmented reality or mixed reality, the XR image corresponds to at least one virtual image that is superimposed over reality.

For example, the XR device may be a head-mounted display with a semi-transparent display, wherein the virtual image is displayed on the semi-transparent display, such that the user can directly see the environment through the semi-transparent display, but with the virtual image superimposed.

As another example, the XR device may be a head-mounted display that is optically opaque. In this case, the head-mounted display may comprise at least one internal camera, particularly several internal cameras being configured to capture images of the environment of the head-mounted display. The real images captured by means of the internal camera are superimposed with the virtual image(s), and the resulting superposition of the real image(s) and the augmented reality image(s) is displayed on a display of the head-mounted display.

As another example, the XR device may be a smartphone or a tablet, wherein an image captured by means of a camera of the XR device is superimposed with the at least one virtual image, and the resulting image is displayed on a display.

In the case of virtual reality, the XR image corresponds to a virtual image being displayed on a display of the XR device.

For example, the XR device may be a head-mounted display that is optically opaque. The VR images may be displayed on a display of the head-mounted display.

The XR streaming method according to the present invention is based on the idea to employ resolution upscaling techniques in order to conserve streaming bandwidth.

Instead of streaming XR images with the full native resolution or rather a maximum resolution of the XR device, the XR image is transmitted with the first resolution that is smaller than the native resolution of the XR device or rather than the maximum resolution of the XR device.

The XR device then up-converts the resolution of the received XR image to the second resolution which may be the native resolution of the XR device, i.e. a maximum resolution of the XR device.

The up-conversion of the received XR image is computationally less expensive than rendering the XR image in the second resolution, which is advantageous due to the possibly limited computational resources available in the XR device and/or in order to conserve energy, as the XR device may be battery-powered.

Accordingly, the main advantage of the XR streaming approach, namely reducing the computational load on the XR device, is maintained by the XR streaming method according to the present invention, while simultaneously reducing the streaming bandwidth necessary to transmit the XR image from the computer device to the XR device.

It is noted that any suitable upscaling technique may be used in order to up-convert the XR image received from the XR application instance in resolution.

For example, up-converting the XR image may comprise upscaling based on pixel duplication with anti-aliasing, machine-learning based upscaling, or any other suitable type of resolution upscaling.

It is noted that the steps of the method described above relate to a single frame. Of course, these steps may be carried out repeatedly, such that a stream of consecutive XR images to the XR device is obtained.

According to an aspect of the present invention, the second resolution corresponds to the native resolution of the XR device. Thus, the second resolution corresponds to the resolution providing the optimal image quality of the XR image received from the XR application instance.

In an embodiment of the present invention, the XR image to be transmitted to the XR device is rendered by the XR application instance with the first resolution. This way, computational resources are conserved on the side of the external computer device, as the XR image is rendered with a smaller resolution than what is to be displayed on the XR device.

The XR streaming method may further comprise the steps of
- rendering, by the XR application instance, a high-resolution XR image to be displayed on the XR device with respect to the predetermined reference position, wherein the high-resolution XR image has a third resolution that is higher than the first resolution; and
- down-converting, by the XR application instance, the high-resolution XR image in resolution, thereby obtaining the XR image to be transmitted to the XR device;

In other words, instead of rendering the XR image to be displayed on the XR device with the first resolution, the XR image to be displayed may be rendered with a higher resolution, namely with the third resolution. After rendering, the XR image to be displayed is down-converted to the first resolution and is transmitted to the XR device.

In fact, the third resolution may be equal to the second resolution. In a particular example, the XR application instance may render the XR image to be displayed in the native resolution of the XR device, i.e. the third resolution may be equal to the native resolution of the XR device.

According to another aspect of the present invention, the XR streaming method further comprises the steps of
- up-converting, by the XR application instance, the XR image to be transmitted to the XR device to the second resolution, thereby obtaining a comparison XR image;
- comparing, by the XR application instance, the high-resolution XR image with the comparison XR image, thereby obtaining difference data; and
- transmitting, by the XR application instance, the difference data to the XR device.

In other words, the up-conversion that is to be performed by the XR device may also be performed by the XR application instance that is integrated into the external computer device, thereby obtaining the comparison XR image. In fact, the XR application instance may employ the same up-conversion technique as the XR device.

The up-converted XR image, i.e. the comparison XR image, is compared with the rendered high-resolution image having the third resolution, such that the difference data is indicative of errors introduced into the up-converted XR image by the up-conversion.

As the XR application instance and the XR device may employ the same up-conversion technique, the difference data likewise describes the expected errors caused by the reprojection performed by the XR device, particularly if the third resolution is equal to the second resolution.

In general, the transmitting the XR image having the first resolution and the difference data may require considerably less streaming bandwidth than transmitting an XR image having the second resolution, which may be the native resolution of the XR device. Thus, in spite of transmitting the difference data to the XR device, the required streaming bandwidth may be significantly reduced compared to streaming the high-resolution XR image.

In a further embodiment of the present invention, the up-converted XR image is corrected by the XR device based on the difference data. Thus, the image quality of the XR image up-converted by the XR device to the second resolution may be enhanced based on the difference data, as errors introduced by the up-conversion can be corrected.

Particularly, the XR application instance and the XR device employ the same up-converting algorithm and/or the same machine-learning model trained to perform the up-conversion. Thus, it is ensured that the difference data accurately represents errors of the up-conversion performed by the XR device. Accordingly, it is ensured that these errors can be corrected reliably based on the difference data.

According to an aspect of the present invention, the up-converted XR image is displayed on a display of the XR device. If the up-converted XR image is corrected based on the difference data described above, the resulting corrected up-converted XR image may be displayed on the display of the XR device.

According to another aspect of the present invention, the XR image to be transmitted is encoded by the XR application instance prior to transmission to the XR device. This way, the necessary streaming bandwidth for transmitting the XR image from the computer device to the XR device is reduced even further.

Optionally, the difference data described above may be encoded by the XR application instance prior to transmission to the XR device. This way, the necessary streaming bandwidth for transmitting the XR image and the difference data from the computer device to the XR device is reduced.

In an embodiment of the present invention, the encoded XR image received by the XR device from the XR application instance is decoded by the XR device. By decoding the encoded XR image, the XR image having the first resolution is recovered by the XR device.

Likewise, the encoded difference data received by the XR device from the XR application instance may be decoded by the XR device. By decoding the encoded difference data, the original difference data obtained by the XR application instance is recovered.

According to the present invention, the problem further is solved by an XR projection system. The XR projection system comprises an XR device and an XR application instance, wherein the XR application instance is integrated into a computer device that is provided separately from the XR device. The XR projection system is configured to perform the XR streaming method according to any one of the variants described above.

Regarding the advantages and further properties of the XR projection system, reference is made to the explanations given above with respect to the XR streaming method, which also hold for the XR projection system and vice versa.

According to an aspect of the present invention, the computer device is or comprises at least one server. Particularly, the computer device may be or comprise a server cloud having several servers that cooperate in providing an XR streaming service.

However, it is to be understood that the computer device may be established as or comprise any other suitable type of computer device, such as a personal computer, as a laptop, as a notebook, as a MAC, as a tablet, as a smartphone, or as any other type of smart device.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows an XR projection system according to the present invention;
- Figure 2 schematically shows an exemplary embodiment of the XR projection system of Figure 1;
- Figure 3 shows a flow chart of an XR streaming method according to the present invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

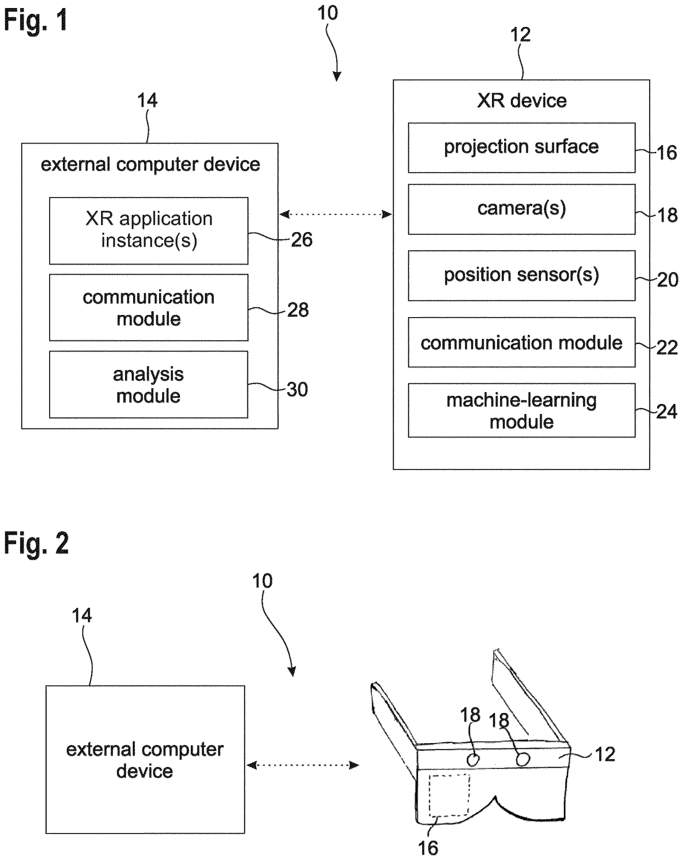

Figure 1 schematically shows a block diagram of an XR projection system 10 comprising an XR device 12 and an external computer device 14 being connected with the XR device 12 in a signal-transmitting manner.

Therein and in the following, the term "connected in a signal transmitting manner" is understood to denote a cable-based or wireless connection that is configured to transmit signals between the respective devices or components.

In general, the XR device 12 is an electronic device that is configured to display an extended reality (XR) image, i.e. an augmented reality (AR) image, a mixed reality (MR) image, and/or a virtual reality (VR) image.

As is illustrated in Figure 2, the XR device 12 may, for example, be configured as a head-mounted display, particularly as an electronic wearable having the shape of glasses.

However, it is to be understood that the XR device 12 may be established as any other XR-capable electronic device, e.g. as a smartphone or as a tablet.

In general, the XR projection system 10 allows a user to observe and/or interact with virtual objects, particularly virtual 3D objects.

If the XR projection system 10 is an AR projection system or an MR projection system, these virtual objects are embedded into a real environment of the user.

Accordingly, the XR device 12 comprises at least one projection surface 16, wherein at least XR image to be displayed is projected onto the projection surface 16, such that the virtual object is displayed to the user.

The projection surface 16 may be a display of the XR device 12.

Optionally, the XR projection system 10 may comprise at least one handheld input device (not shown in Figure 1), wherein the user may control the XR projection system 10 by means of the at least one handheld input device.

For example, the at least one handheld input device may be established as a pen-shaped device or as any other type of suitable input device.

The XR device 12 further comprises at least one camera 18, at least one position sensor 20, a communication module 22, and a machine-learning module 24.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

The at least one camera 18 is configured to capture images of an environment of the XR device 12, particularly of an environment in front of the XR device 12.

Particularly, the at least one camera 18 may be established as a stereo camera. Alternatively or additionally, the XR device 12 may comprise several cameras with overlapping field of view. Thus, depth-information on images taken by the at least one camera 18 can be determined based on images taken by the at least one camera 18.

The at least one position sensor 20 is configured to determine a position, i.e. a location and/or orientation of the XR device 12.

For example, the at least one position sensor 20 may be established as a gyroscope, as an acceleration sensor, as a magnetometer, as a GNSS device, and/or as any other suitable type of position sensor.

In general, the external computer device 14 may be established as any type of electronic computing device that is configured to have the functionality described below.

For example, the external computer device 14 may be established as a server with suitable hardware and with suitable software being executed on the hardware.

As another example, the external computer device 14 may be established as a personal computer, as a laptop, as a notebook, as a MAC, as a tablet, as a smartphone, or as any other type of smart device.

The external computer device 14 comprises at least one XR application instance 26, and a communication module 28.

Optionally, the external computer device 14 comprises an analysis module 30.

The functionality of the individual modules will be described in more detail below.

The communication module 22 of the XR device 12 and the communication module 28 of the external computer device 14 are configured to communicate with each other.

In fact, image data, position data and/or control data may be exchanged between the XR device 12 and the external computer device 14 by means of the communication modules 22, 28.

Therein, any suitable wireless or cable-based transmission technique may be used by the communication modules 22, 28, e.g. WLAN, 4G, 5G, Ethernet, etc.

It is noted that the embodiment of the XR projection system 10 illustrated in Figures 1 and 2 is understood to be exemplary.

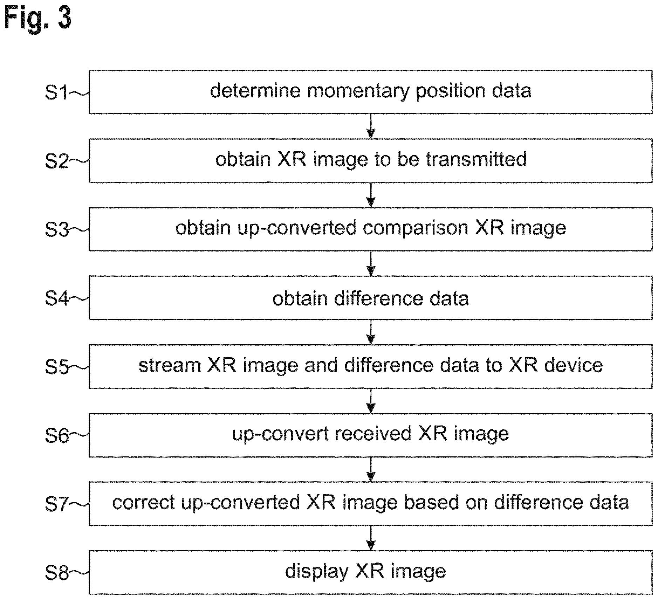

The XR projection system 10 is configured to perform an XR streaming method of streaming XR images from the at least one XR application instance 26 to the XR device 12, which is explained in the following with reference to Figure 3.

Momentary position data is determined, wherein the momentary position data is associated with a momentary position of the XR device 12 (step S1).

In general, the momentary position data comprises information on a momentary location of the XR device 12 and/or information on a momentary orientation of the XR device 12.

Preferably, the momentary position data comprises information on the momentary location of the XR device 12 and information on the momentary orientation of the XR device 12, as this uniquely determines the field of view of a user of the XR device 12 or of the XR device 12 itself.

In the exemplary embodiment shown in Figures 1 and 2, the momentary position data is determined by means of the at least one position sensor 20 of the XR device 12.

Alternatively or additionally, the momentary position data may be determined by means of at least one external camera, i.e. at least one camera that is not integrated into the XR device 12.

The at least one external camera may be connected to the analysis module 30, wherein the analysis module 30 is configured to determine the momentary position data based on images of the XR device 12 captured by means of the at least one external camera. The analysis module 30 may be integrated into the XR device 12 or into the external computer device 14.

Optionally, the XR device 12 may comprise one or several light-emitting elements, particularly one or several LEDs. The analysis module 30 may determine the momentary position data based on images of the one or several light-emitting elements captured by means of the at least one external camera, particularly via triangulation.

Further, it is also conceivable that the analysis module 30 may determine the momentary position data based on images captured by means of the at least one camera 18.

The momentary position data is transmitted to the at least one XR application instance 26 via the communication modules 22, 28.

An XR image to be transmitted to the XR device 12 is obtained by the at least one XR application instance 26 based on the momentary position data, wherein the XR image is rendered with respect to a predetermined reference position (step S2).

In general, the obtained XR image has a first resolution, wherein the first resolution is smaller than a second resolution with which the XR image is to be displayed on the XR device 12.

The second resolution may be a native resolution of the XR device 12.

According to one variant, the XR image to be transmitted to the XR device 12 may be rendered by the at least one XR application instance 26 with the first resolution.

According to another variant, a high-resolution XR image may be rendered by the at least one XR application instance 26 with a third resolution being higher than the first resolution. Particularly, the third resolution may be equal to the second resolution.

The high-resolution XR image rendered may be down-converted by the at least one XR application instance 26 to the first resolution, thereby obtaining the XR image to be transmitted to the XR device 12.

Therein, the predetermined reference position has a predetermined relation to the momentary position of the XR device 12.

For example, the predetermined reference position may correspond to a first eye position, i.e. to the location and/or orientation of a first eye of the user, or to a second eye position, i.e. to the location and/or orientation of a second eye of the user.

As another example, the predetermined reference position may be different from both the first eye position and from the second eye position. In a particular example, the predetermined reference position may be an average of the first eye position and the second eye position.

However, it is to be understood that the predetermined reference position may be an arbitrary position having a fixed relation to the momentary position of the XR device 12.

Optionally, the XR image to be transmitted to the XR device 12 obtained by the at least one XR application instance 26 may be up-converted to the second resolution by the at least one XR application instance 26, thereby obtaining a comparison image (step S3).

Therein, the at least one XR application instance 26 may employ any suitable upscaling technique in order to up-convert the XR image to be transmitted to the second resolution.

For example, up-converting the XR image may comprise upscaling based on pixel duplication with anti-aliasing, machine-learning based upscaling, or any other suitable type of resolution upscaling.

The high-resolution XR image described above may be compared by the at least one XR application instance 26 with the comparison XR image, thereby obtaining difference data (step S4).

The XR image having the first resolution, and optionally the difference data, is streamed to the XR device 12 by the at least one XR application instance 26 via the communication modules 28, 22 (step S5).

Therein, the XR image having the first resolution may be encoded before transmission to the XR device 12. Upon reception, the XR device 12 may decode the encoded XR image, thereby recovering the XR image having the first resolution.

Optionally, the difference data may be encoded before transmission to the XR device 12. Upon reception, the XR device 12 may decode the encoded difference, thereby recovering the difference data obtained by the XR application instance 26.

It is noted that the XR image or rather the XR image data comprising the XR image transmitted to the XR device 12 may comprise information on a view matrix and/or a projection matrix.

As the XR image to be displayed may comprise virtual, world-anchored objects, particularly virtual 3D objects, the view matrix and/or the projection matrix comprise useful information for correctly displaying the XR image on the XR device 12.

The view matrix comprises all information necessary in order to transform objects from the world space to the view space, wherein the view space is associated with the XR device 12, particularly with the at least one camera 18 of the XR device 12. In the view space, the at least one camera 18 may rest at the origin, particularly wherein the main view direction of the at least one camera is along the z-axis.

Particularly, the view matrix may be determined based on a determined momentary position of the XR device 12 or of the at least one camera 18 of the XR device 12.

Likewise, the view matrix may be determined based on a determined updated position of the XR device 12 or of the at least one camera 18 of the XR device 12.

The projection matrix comprises all information necessary in order to project objects from the view space into the projection space, wherein the projection space is associated with the XR device 12, particularly with the at least one camera 18 of the XR device 12. In general, this projection of objects into the projection space allows to correctly display virtual (3D) objects on the XR device 12.

The XR image having the first resolution received by the XR device 12 is up-converted by the XR device 12 to the second resolution, thereby obtaining an up-converted XR image having the second resolution (step S6).

For example, the machine-learning module 24 may comprise a machine-learning model that has been pre-trained to up-convert the XR image received.

However, it is to be understood that any other suitable resolution upscaling technique may be used by the XR device 12.

In fact, the at least one XR application instance 26 and the XR device 12 may employ the same upscaling technique in order to obtain the comparison XR image and the up-converted XR image, respectively.

Optionally, the up-converted XR image may be corrected by the XR device 12 based on the difference data received from the at least one XR application instance 26 (step S7).

As already described above, the difference data is indicative of errors introduced by the up-conversion from the first resolution to the second resolution. Accordingly, these errors can be corrected based on the difference data.

The up-converted XR image is displayed by the XR device (step S8).

In fact, the up-converted XR image may be displayed on the projection surface 16.

If the up-converted XR image has been corrected based on the difference data, the corresponding corrected up-converted XR image may be displayed.

Further, it is noted that the up-converted XR image (or the corrected up-converted XR image) may be reprojected by the XR device 12 based on an updated position of the XR device 12 in order to account for movements of the user and/or of the XR device 12.

The updated position may differ from the momentary position of the XR device 12 that the XR image has been rendered for due to a movement of the user and/or a movement of the XR device 12. This difference is accounted for by the reprojection performed by the XR device 12.

The updated position of the XR device 12 may be determined by the position sensor(s) 20 or according to any of the other variants described above.

For example, the reprojection may be performed by the machine-learning module 24, or more precisely by a machine-learning model of the machine-learning module 24 that has been pre-trained to perform the reprojection.

However, it is to be understood that any other suitable type of reprojection technique may be used.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. An extended reality, XR, streaming method of streaming XR images from an XR application instance (26) to an XR device (12), wherein the XR application instance (26) is integrated into a computer device (14) that is provided separately from the XR device (12), wherein the XR streaming method comprises the steps of
- obtaining, by the XR application instance (26), an XR image to be transmitted to the XR device (12), wherein the XR image is obtained with respect to a predetermined reference position, wherein the predetermined reference position has a predetermined relation to a momentary position of the XR device (12), wherein the XR image has a first resolution;
- streaming, by the XR application instance (26), the XR image to the XR device (12); and
- up-converting, by the XR device (12), the XR image received from the XR application instance (26) in resolution, thereby obtaining an up-converted XR image to be displayed on the XR device (12), wherein the up-converted XR image has a second resolution that is higher than the first resolution.

2. The XR streaming method of claim 1, wherein the second resolution corresponds to the native resolution of the XR device (12).

3. The XR streaming method according to any one of the preceding claims, wherein the XR image to be transmitted to the XR device (12) is rendered by the XR application instance (26) with the first resolution.

4. The XR streaming method according to claim 1 or 2, further comprising the steps of
- rendering, by the XR application instance (26), a high-resolution XR image to be displayed on the XR device (12) with respect to the predetermined reference position, wherein the high-resolution XR image has a third resolution that is higher than the first resolution; and
- down-converting, by the XR application instance (26), the high-resolution XR image in resolution, thereby obtaining the XR image to be transmitted to the XR device (12);

5. The XR streaming method of claim 4, wherein the third resolution is equal to the second resolution.

6. The XR streaming method of claim 4 or 5, further comprising the steps of
- up-converting, by the XR application instance (26), the XR image to be transmitted to the XR device (12) to the second resolution, thereby obtaining a comparison XR image;
- comparing, by the XR application instance (26), the high-resolution XR image with the comparison XR image, thereby obtaining difference data; and
- transmitting, by the XR application instance (26), the difference data to the XR device (12).

7. The XR streaming method of claim 6, wherein the up-converted XR image is corrected by the XR device (12) based on the difference data.

8. The XR streaming method of claim 6 or 7, wherein the XR application instance (26) and the XR device (12) employ the same up-converting algorithm and/or the same machine-learning model trained to perform the up-conversion.

9. The XR streaming method according to any one of the preceding claims, wherein the up-converted XR image is displayed on a display of the XR device (12).

10. The XR streaming method according to any one of the preceding claims, wherein the XR image to be transmitted is encoded by the XR application instance (26) prior to transmission to the XR device (12).

11. The XR streaming method of claim 10, wherein the encoded XR image received by the XR device (12) from the XR application instance (26) is decoded by the XR device (12).

12. An XR projection system, wherein the XR projection system (10) comprises an XR device (12) and an XR application instance (26), wherein the XR application instance (26) is integrated into a computer device (14) that is provided separately from the XR device (12), and wherein the XR projection system (10) is configured to perform the XR streaming method according to any one of the preceding claims.

13. The XR projection system of claim 12, wherein the computer device (14) is or comprises at least one server.
